# EUROPÄISCHE PATENTSCHRIFT

(11) **EP 1 849 544 B1**
(45) Veröffentlichungstag und Bekanntmachung des Hinweises auf die Patenterteilung: **24.01.2018**
(21) Anmeldenummer: 07106481.0
(22) Anmeldetag: 19.04.2007
(51) Int. Cl.: B23B 51/00, B23K 1/00, B23K 101/20

(54) **Hartstoffeinsatz**
Hard material insert
Plaquette de coupe

(30) Priorität: 27.04.2006 DE 102006000201
(43) Veröffentlichungstag der Anmeldung: 31.10.2007
(73) Patentinhaber: HILTI Aktiengesellschaft, 9494 Schaan (LI)
(72) Erfinder: Höggerl, Klaus, 86923, Finning (DE); Koch, Olaf, 86916, Kaufering (DE); Assel, Thorsten, 86899, Landsberg (DE)
(74) Vertreter: Hilti Aktiengesellschaft Corporate Intellectual Property

(56) Entgegenhaltungen:
- DE-A1- 19 709 771
- JP-A- H10 279 374
- US-A- 2 308 569
- US-A- 4 941 711
- US-A- 5 060 739
- US-A1- 2001 013 430

## Beschreibung

Die Erfindung bezeichnet einen Hartstoffeinsatz gemäß dem Oberbegriff des Anspruchs 1 für ein Schlagbohrwerkzeug, insbesondere Drehschlagbohrer im Durchmesserbereich von 4 mm bis 45 mm zur Verwendung mit drehschlagenden Handwerkzeugmaschinen, sowie ein damit bestücktes Schlagbohrwerkzeug. Ein solcher Hartstoffeinsatz ist z.B. aus der US 2001/0013430 A1 oder aus der DE 197 09 771 A1 bekannt. Üblicherweise sind derartige Drehschlagbohrer für drehschlagende Handwerkzeugmaschinen im Schaftende mit einer meisselförmigen Hartmetallplatte bestückt, die bodenseitig sowie über zwei gegenüberliegende Befestigungsflächen in einen sich diametral durch das Schaftende erstreckenden Aufnahmeschlitz hart eingelötet ist. Durch die beim Fügen und Schlagbohren auftretenden hohen Temperaturunterschiede kommt es vermittelt durch unterschiedliche Temperaturausdehnungskoeffizienten des Hartstoffeinsatzes und des Schaftendes zu hohen Eigenspannungen im diese stoffschlüssig verbindenden Hartlot, was zum Versagen führen kann.

Nach der DE10208631 weist ein plattenförmiger Hartstoffeinsatz mit einer den Schneidkanten gegenüberliegenden Bodenfläche und zwei quer dazu angeordneten Befestigungsflächen, zwischen der Bodenfläche und den Befestigungsflächen jeweils Fasen auf, die den Innenkanten des Aufnahmeschlitzes des Schaftendes zugeordnet sind. Die beiden zur Bodenfläche und den Befestigungsflächen senkrechten Freiflächen gehen ohne Fasen in die Bodenfläche über.

Nach der DE4419641 ist ein kompakter Hartstoffeinsatz mit Schneidkanten bekannt, der über die den Schneidkanten gegenüberliegende Bodenfläche ohne Fase stumpf auf die Grundfläche des Bohrerschafts aufgelötet ist.

Nach der DE10006936 ist ein zum Bohren von armiertem Beton optimierter Drehschlagbohrer mit einem X-förmigen Hartstoffeinsatz aus Sinterwerkstoff bekannt, der im Schaftende über zwei diametrale Befestigungsflächen und der Bodenfläche in einer passenden X-förmigen Verzapfung eingelötet und im Sektor zweier diametraler Freiflächen über die Bodenfläche stumpf auf die Grundfläche des Schaftendes aufgelötet ist. Der zugeordnete X-förmige Hartstoffeinsatz nach DE10006932 weist in der den Schneidkanten gegenüberliegenden Bodenfläche ausschliesslich an den Befestigungsflächen eine Fase auf.

Nach der DE4442266 ist ein kreuzartiger Hartstoffeinsatz mit einer in der Bodenfläche gleichförmig umlaufenden Fase gleicher Breite bekannt.

Die Aufgabe der Erfindung besteht in der Realisierung eines Hartstoffeinsatzes für ein Schlagbohrwerkzeug mit weiter verbesserter Standzeit beim Bohren von armiertem Beton.

Die Aufgabe wird im Wesentlichen durch die Merkmale des Anspruchs 1 gelöst. Vorteilhafte Weiterbildungen ergeben sich aus den Unteransprüchen.

So weist ein Hartstoffeinsatz für ein Schlagbohrwerkzeug eine Schneidkante und eine, zur stoffschlüssigen Befestigung (Hartverlötung) an einem Schaftende des Schlagbohrwerkzeugs ausgebildete, der Schneidkante gegenüberliegende Bodenfläche auf, welche zumindest zu einer quer zur Bodenfläche angeordneten Befestigungsfläche eine zumindest stückweise umlaufende erste Fase ausbildet, wobei zumindest zu einer weiteren quer zur Bodenfläche angeordneten Freifläche eine zumindest stückweise umlaufende zweite Fase ausbildet ist, die breiter als die erste Fase ist.

Durch die an der Freifläche breit ausgebildete zweite Fase erstreckt sich bei der am Schaftende in diesem Sektor auftretenden stumpfflächigen Hartverlötung das Hartlot über einen keilförmig axial erweiterten Radialrandbereich. Wie sich mit entsprechenden Simulationen nach der Finite-Elemente-Methode (FEM) zeigen lässt, weist dadurch die von-Mises Vergleichsspannung sowie der hydrostatische Spannungszustand, welche bei Hartlot als Versagenskriterium betrachtet werden kann, keine Extremwerte am Rand auf, wo es bevorzugt zur Rissinitiierung kommt. Zudem dient der keilförmig axial erweiterten Radialrandbereich zur definierten Aufnahme sowie zum Ausgleich von während der Massenproduktion bei der Hartverlötung geringfügig tolerierenden Hartlotmengen.

Vorteilhaft beträgt die Breite der zweiten Fase zwischen dem Doppelten und dem Fünffachen der Breite der ersten Fase, weiter vorteilhaft dem Doppelten, wodurch das dazu quadratisch proportionale Fasenvolumen des keilförmigen Radialrandbereiches wesentlich grösser als das Fasenvolumen der ersten Fase ist, die bei der Verlötung einer, relativ grosse Toleranzen aufweisende, Innenkante des Schaftendes zugeordnet wird.

Vorteilhaft liegt der Fasenwinkel zu einer Bohrachse im Bereich von 30° bis 60°, weiter vorteilhaft 45°, wodurch dieser längs der Scherspannungskomponente des Spannungstensors im Hartlot entspricht.

Vorteilhaft ist der Hartstoffeinsatz X-förmig ausgebildet, wobei die erste Fase bezüglich zweier diametraler konkaver Befestigungsflächen und die breitere zweite Fase bezüglich zweier diametraler konkaver Freiflächen ausgebildet ist, die weiter vorteilhaft als Hauptabfuhrnuten ausgebildet sind, wodurch ein hohes Fördervolumen des abgetragenen Bohrkleins ermöglicht wird.

Vorteilhaft ist der Hartstoffeinsatz mit einem Schaftende eines Schlagbohrwerkzeugs stoffschlüssig verbunden, weiter vorteilhaft bspw. mit einer Bronze hart verlötet, wodurch ein Schlagbohrwerkzeug mit optimierter Standzeit ausgebildet ist.

Vorteilhaft ist der X-förmige Hartstoffeinsatz über zwei diametrale Befestigungsflächen, den ersten Fasen und der Bodenfläche in einer passenden X-förmigen Verzapfung im Schaftende eingelötet sowie in den Sektoren zweier diametraler Freiflächen mit der Bodenfläche und den zweiten Fasen stumpf auf eine dort radial über die Bodenfläche überstehende Grundfläche des Schaftendes aufgelötet, wodurch ein Schlagbohrwerkzeug mit optimierter Standzeit beim Bohren von armiertem Beton ausgebildet ist.

Die Erfindung wird bezüglich eines vorteilhaften Ausführungsbeispiels näher erläutert mit:
Fig. 1 als Schlagbohrwerkzeug in Seitenansicht
Fig. 2 als Aufsicht
Fig. 3 als Querschnitt (III-III in Fig. 1)
Fig. 4 als Längsschnitt (IV-IV in Fig. 2)
Fig. 5 als weiterer Längsschnitt (V-V in Fig. 2)
Fig. 6 als vergrösserte Einzelheit (VI in Fig. 5)

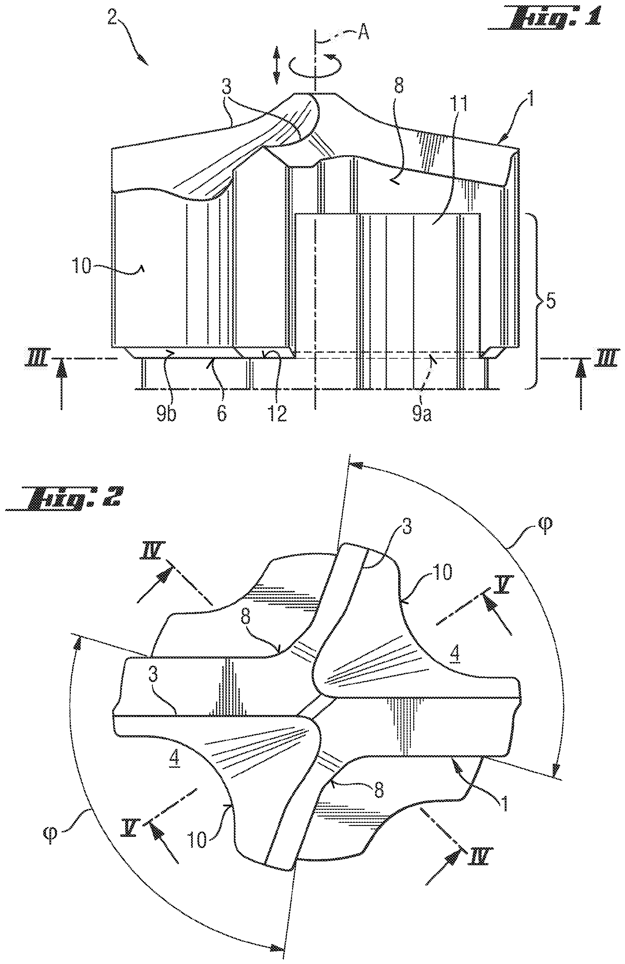

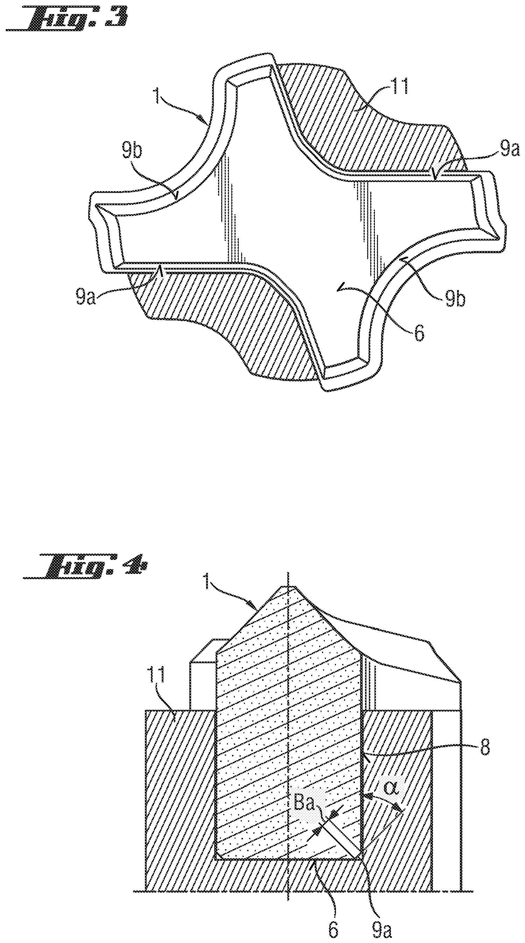

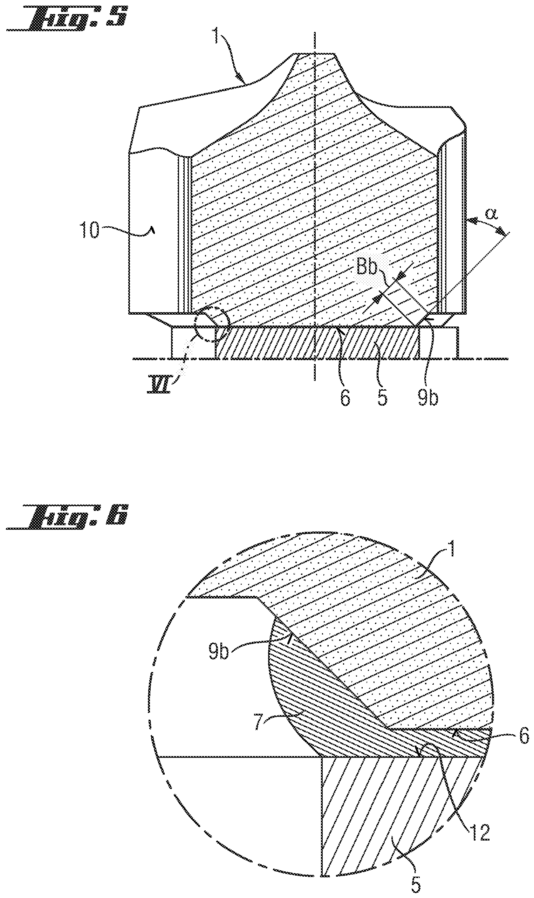

So weist nach den Fig. 1-6 in Gesamtschau ein Hartstoffeinsatz 1 eines nur angedeuteten um eine Achse A drehend und schlagend angetriebenen Schlagbohrwerkzeuges 2 in Form eines Drehbohrmeissels zwei X-förmig angeordnete Schneidkanten 3 und zwei diametral gegenüberliegende Hauptabfuhrnuten 4 auf. Der Hartstoffeinsatz 1 ist mit einem Schaftende 5 des Schlagbohrwerkzeugs 2 über eine den Schneidkanten 3 gegenüberliegende Bodenfläche 6 stoffschlüssig verbunden indem er mit Hartlot 7 in Form von Bronze verlötet ist. Zwei quer zur Bodenfläche 6 angeordnete konkave Befestigungsflächen 8 bilden je eine stückweise umlaufende erste Fase 9a einer Breite Ba aus, wobei zwei weitere quer zur Bodenfläche 6 angeordneten konkave Freiflächen 10 je eine stückweise umlaufende zweite Fase 9b ausbilden, die mit einer Breite Bb doppelt so breit wie die erste Fase 9a mit einer Breite Ba ist. Der Fasenwinkel α [alpha] zur Bohrachse A beträgt jeweils 45°. Der X-förmige Hartstoffeinsatz 1 ist über die zwei diametralen Befestigungsflächen 8, die ersten Fasen 9a und die Bodenfläche 6 in einer passenden X-förmigen Verzapfung 11 im Schaftende 5 aus Stahl eingelötet sowie in den Sektoren ϕ [phi] der beiden diametralen Freiflächen 10 mit der Bodenfläche 6 und den zweiten Fasen 9b stumpf auf eine dort radial über die Bodenfläche 6 überstehende Grundfläche 12 des Schaftendes 5 aufgelötet.

## Patentansprüche

1. Hartstoffeinsatz für ein Schlagbohrwerkzeug (2) mit zumindest einer Schneidkante (3) und einer, zur stoffschlüssigen Befestigung an einem Schaftende (5) des Schlagbohrwerkzeugs (2) ausgebildeten, der Schneidkante (3) gegenüberliegenden Bodenfläche (6), welche zumindest zu einer quer zur Bodenfläche (6) angeordneten Befestigungsfläche (8) eine zumindest stückweise umlaufende erste Fase (9a) ausbildet, **dadurch gekennzeichnet, dass** zumindest zu einer weiteren quer zur Bodenfläche (6) angeordneten Freifläche (10) eine zumindest stückweise umlaufende zweite Fase (9b) ausgebildet ist, die breiter als die erste Fase (9a) ist.

2. Hartstoffeinsatz nach Anspruch 1, **dadurch gekennzeichnet, dass** die Breite (Bb) der zweiten Fase (9b) zwischen dem Doppelten und dem Fünffachen der Breite (Ba) der ersten Fase (9a) beträgt.

3. Hartstoffeinsatz nach Anspruch 1 oder 2, **dadurch gekennzeichnet, dass** der Fasenwinkel (α) zu einer Bohrachse (A) im Bereich von 30° bis 60° liegt.

4. Hartstoffeinsatz nach einem der Ansprüche 1 bis 3, **gekennzeichnet durch** eine X-förmige Ausbildung, wobei die erste Fase (9a) bezüglich zweier diametraler konkaver Befestigungsflächen (8) und die breitere zweite Fase (9b) bezüglich zweier diametraler konkaver Freiflächen (10) ausgebildet ist.

5. Hartstoffeinsatz nach einem der Ansprüche 1 bis 4, **gekennzeichnet durch** eine stoffschlüssige Verbindung mit dem Schaftende (5) des Schlagbohrwerkzeugs (2).

6. Hartstoffeinsatz nach Anspruch 4 und 5, **gekennzeichnet durch** eine Hartverlötung, wobei die zwei diametralen Befestigungsflächen (8), die ersten Fasen (9a) und die Bodenfläche (6) in einer passenden X-förmigen Verzapfung (11) im Schaftende (5) eingelötet sowie in den Sektoren (ϕ) der zwei diametralen Freiflächen (10) die Bodenfläche (6) und die zweiten Fasen (9b) stumpf auf eine dort radial über die Bodenfläche (6) überstehende Grundfläche (12) des Schaftendes (12) aufgelötet sind.

## Claims

1. Hard material insert for a percussion drill tool (2), comprising at least one cutting edge (3) and a base surface (6) located opposite the cutting edge (3) for fastening by a material joint to a shaft end (5) of the percussion drill tool (2), which base surface (6) forms an at least partially circumferential first chamfer (9a) on at least one fastening flank (8) arranged transversely with respect to the base surface (6), **characterised in that** an at least partially circumferential second chamfer (9b), which is wider than the first chamfer (9a), is formed on at least one further, free flank (10) arranged transversely with respect to the base surface (6).

2. Hard material insert according to Claim 1, **characterised in that** the width (Bb) of the second chamfer (9b) is from twice to five times as great as the width (Ba) of the first chamfer (9a).

3. Hard material insert according to Claim 1 or 2, **characterised in that** the chamfer angle (α) lies in the range from 30° to 60° with respect to a drilling axis (A).

4. Hard material insert according to any one of Claims 1 to 3, **characterised by** an X-shaped configuration, wherein the first chamfer (9a) is formed with respect to two diametral concave fastening flanks (8), and the wider second chamfer (9b) is formed with respect to two diametral concave free flanks (10).

5. Hard material insert according to any one of claims 1 to 4, **characterised by** a connection by a material joint to the shaft end (5) of the percussion drill tool (2).

6. Hard material insert according to Claims 4 and 5, **characterised by** a hard soldering, wherein the two diametral fastening flanks (8), the first chamfers (9a) and the base surface (6) are soldered into a matching X-shaped mortise and tenon joint (11) in the shaft end (5) and, in the sectors (ϕ) of the two diametral free flanks (10), the base surface (6) and the second chamfers (9b) are butt-soldered to a base surface (12) of the shaft end (5) protruding radially above the base surface (6) at that location.

## Revendications

1. Insert en matériau dur pour un outil de perçage à percussion (2) ayant au moins une arête tranchante (3) et une surface de fond (6) opposée à l'arête tranchante (3) et conçue pour une fixation par matière à une extrémité de tige (5) de l'outil de perçage à percussion (2), laquelle surface de fond (6) forme un premier biseau (9a) au moins en partie circonférentiel par rapport à une surface de fixation (8) agencée au moins transversalement à la surface de fond, **caractérisé en ce qu'**un second biseau (9b) au moins en partie circonférentiel est formé par rapport à une autre surface libre (10) agencée transversalement à la surface de fond (6), lequel second biseau est plus large que le premier biseau (9b).

2. Insert en matériau dur selon la revendication 1, **caractérisé en ce que** la largeur (Bb) du second biseau (9b) est comprise entre le double et le quintuple de la largeur (Ba) du premier biseau (9a).

3. Insert en matériau dur selon la revendication 1 ou 2, **caractérisé en ce que** l'angle de biseau (α) par rapport à un axe de perçage (A) est dans la plage de 30° à 60°.

4. Insert en matériau dur selon l'une des revendications 1 à 3, **caractérisé par** une configuration en forme de X, dans lequel le premier biseau (9a) est formé par rapport à deux surfaces de fixation concaves diamétralement opposées (8) et le second biseau plus large (9b) est formé par rapport à deux secondes surfaces libres concaves diamétralement opposées (10).

5. Insert en matériau dur selon l'une des revendications 1 à 4, **caractérisé par** une liaison par matière avec l'extrémité de tige (5) de l'outil de perçage à percussion (2).

6. Insert en matériau dur selon les revendications 4 et 5, **caractérisé par** un brasage fort, dans lequel les deux surfaces de fixation diamétralement opposées (8), le premier biseau (9a) et la surface de fond (6) sont brasés dans un assemblage à tenon et mortaise (11) en forme de X adapté dans l'extrémité de tige (5) et dans les secteurs (ϕ) des deux surfaces libres diamétralement opposées (10), la surface de fond (6) et les seconds biseaux (9b) sont brasés bout à bout sur une surface de base (12) de l'extrémité de tige (12) faisant radialement saillie au-dessus la surface de fond (6).
